# EUROPEAN PATENT SPECIFICATION

(11) **EP 1 845 640 B1**
(45) Date of publication and mention of the grant of the patent: **04.03.2009**
(21) Application number: 06761427.1
(22) Date of filing: 14.07.2006
(51) Int. Cl.: H04B 10/12, H04L 12/56, H04Q 11/00

(54) **METHOD FOR RESTORING LINK FAILURE AND APPARATUS THEREOF**
VERFAHREN ZUM HERSTELLEN EINER VERSAGTEN VERBINDUNG UND GERÄT DAFÜR
PROCEDE ET APPAREIL POUR RETABLIR UNE LIAISON DEFAILLANTE

(30) Priority: 15.07.2005 CN 200510035896
(43) Date of publication of application: 17.10.2007
(73) Proprietor: Huawei Technologies Co., Ltd., Longgang District Shenzhen Guangdong 518129 (CN)
(72) Inventor: XU, Huiying, Shenzhen, Guangdong Province 518129 (CN); XU, Yongliang, Shenzhen, Guangdong Province 518129 (CN)
(74) Representative: Epping - Hermann - Fischer
(86) International application number: PCT/CN2006/001680
(87) International publication number: WO 2007/009360

(56) References cited:
- EP-A1- 1 489 784
- WO-A1-03/107606
- WO-A1-20/04077759
- CN-A- 1 392 686
- CN-A- 1 499 747
- US-A1- 2002 131 362
- DESHENG SUN ZTE CORPORATION: "Adding local restoration scenarios into G.8080 appendix" ITU-T DRAFT STUDY PERIOD 2005-2008, INTERNATIONAL TELECOMMUNICATION UNION, GENEVA, CH, vol. STUDY GROUP 15, 16 May 2005 (2005-05-16), pages 1-6, XP017407451
- WANG ZHIFENG WUHAN RESEARCH INSTITUTE OF POSTS & TELECOMMUNICATIONS P R CHINA ET AL: "Supplement of Clause 11 in G.8080 Amendment 1" T DRAFT STUDY PERIOD 2005-2008, INTERNATIONAL TELECOMMUNICATION UNION, GENEVA, CH, vol. STUDY GROUP 15, 29 November 2004 (2004-11-29), pages 1-8, XP017407169
- MICHAEL MAYER NORTEL UNITED STATES OF AMERICA: "Draft revised Recommendation G.8080/Y.1304 (Version 0.5.02), Architecture for the Automatically Switched Optical Network (ASON)" ITU-T DRAFT STUDY PERIOD 2005-2008, INTERNATIONAL TELECOMMUNICATION UNION, GENEVA, CH, vol. STUDY GROUP 15, 16 May 2005 (2005-05-16), pages 1-83, XP017410725

## Description

### Field of the Invention

The present invention relates to technologies for recovering from a link failure, and in particular to a method and device for recovering from an inter-domain link failure.

### Background of the Invention

Traditionally, traffic scheduling in a conventional optical network is implemented through a static configuration by a network administrator, but isn't supported by dynamic provision. Typically, the traditional optical network is of linear or ring networking, and its protective recovery is implemented by Multiplex Section Protection and Sub-Network Connection Protection (SNCP), which is substantially a static recovery method. However, as data services and dedicated services develop rapidly, requirements for network bandwidth increases gradually, and requirements for dynamic allocation of network bandwidth becomes increasingly pressing. The network has been expected to provide the dynamic provision and to support a meshed network architecture, and also expected to be capable of flexible extension and fast protective recovery.

The Automatically Switched Optical Network (ASON) has effectively solved the above problem. The ASON uses the Generalized Multi-Protocol Label Switching (GMPLS) protocol within its control plane, which has become a core technology during the development of optical networks. Two connection types are newly provided for the ASON, one of which is a soft permanent connection type, and the other of which is a switched connection type. At present, the International Telecommunications Union - Telecommunication Standardization Sector (ITU-T) has substantially accomplished the definition for ASON architecture and requirements. The Internet Engineering Task Force (IETF) has accomplished the protocol extension and definition for signaling, automatic discovery and routing within a single domain.

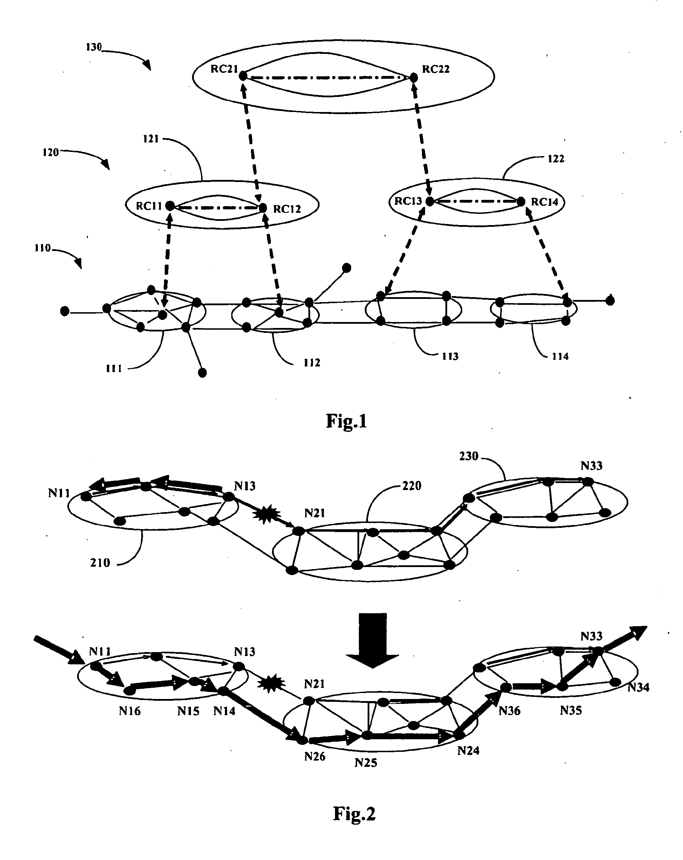

As the ASON develops, it is required for the control plane to manage a large-scale network. At present, both the ITU-T and the Optical Internetworking Forum (OIF) adopt a hierarchical network model, where a control domain at a lower layer is represented as a proxy node at an upper layer. The proxy node can distribute an abstract topology, an inter-domain link, a reachable addresses, etc. indicative of a domain, and thus, a hierarchical network can be formed upward in a layer-by-layer way. As illustrated in Figure 1, for example, a layer 0, i.e. 110, is a physical network divided into multiple Control Domains (CDs) 111, 112, 113, and 114. At a layer 1, i.e. 120, each of the domains at the layer 0, i.e. 110, is abstracted as a node. For example, the CDs 111, 112, 113 and 114 correspond to nodes RC11, RC12, RC13 and RC14, respectively. At a layer 2, i.e. 130, each of the domains at the layer 1 (120) is abstracted as a node. For example, CDs 121 and 122 correspond to nodes RC21 and RC22, respectively. Therefore, the entire network exhibits a 3-layered network topology.

Within such a multi-domain network, a rate of recovering from a connection failure becomes a critical bottle neck, since in the case of multiple domains, a connection usually spans multiple domains, and passes far more nodes than in the case of a single domain. Therefore, the rate has become an urgent challenge to be addressed for the extended network. Generally, a current cross-domain connection is recovered locally by means of an internal tunnel within a domain in the case of a link failure within a single domain and recovered by means of an end-to-end connection recovery in the case of an inter-domain link failure. As shown in Figure 2, for example, in the case that an inter-domain link N13-N21 between the 210 and 220 fails, the first node N11 in a Label Switch Path (LSP) is notified through Resource Reservation Protocol - Traffic Engineering (RSVP-TE) signaling to perform an end-to-end recovery, and a recovered route can be N11->N16->N15->N14->N26->N25->N24->N36-> N35-N33. However, such a method for recovering from an inter-domain link failure is disadvantageous in that the required end-to-end recovery spanning multiple CDs may be time-consuming and inconvenient for planning network resources.

The document "Adding local restoration scenarios into G.8080 appendix", Desheng Sun Zte Corporation, ITU-T Draft Study Period 2005 - 2008, International Telecommunication Union, Geneva, CH; Vol. Study Group 15, 16 May 2005, pp. 1-6, describes several examples of link restoration after a link failure according to the examples given above.

The document "Draft revised Recommendation G.8080/Y.1304 (Version 0.5.02), Architecture for the Automatically Switched Optical Network (ASON)", Michael Mayer Nortel United States of America, ITU-T Draft Study Period 2005 - 2008, International Telecommunication Union, Geneva, CH; Vol. Study Group 15, 16 May 2005, pp. 1 - 83, specifies the architecture and requirements for the automatic switched transport network as applicable to SDH transport networks and Optical Transport Networks. A set of control plane components that are used to manipulate transport network resources in order to provide functionality of setting up, maintaining and releasing connections is shown, wherein the use of components allows for the separation of call control from connection control and the separation of routing and signalling.

### Summary of the Invention

The present invention provides a method and a device for recovering from a link failure. Therefore, the time required for a recovery from an inter-domain link failure can be reduced.

A method for recovering from a link failure according to the present invention may be applicable to recovery from an inter-domain link failure in a hierarchical automatic-switching optical network. The method includes:
initiating a local recovery by an upstream node of a failed inter-domain link;
performing the local recovery with the upstream node of the failed inter-domain link as a source node and a downstream node of the failed inter-domain link as a destination node. The local recovery is performed if the upstream node detects the inter-domain link failure or if the downstream node detects and notifies the upstream node. The performing the local recovery includes: inquiring to obtain a recovery path to the downstream node by a connection controller at the upstream node; initiating establishment of the recovery path from the upstream node to the downstream node by a protocol controller; upon the establishment of the recovery path, bridging traffic on the failed inter-domain link onto the recovery path.

The local recovery is performed in unit of connection, or the local recovery is performed on all traffics routed through the failed inter-domain link in unit of link.

Optionally, the inquiring for a recovery path to the downstream node includes:
inquiring a routing controller for the recovery path, with the upstream node of the failed inter-domain link as a source node and the downstream node of the failed inter-domain link as a destination node for connection recovery, and
calculating and returning the recovery path to the connection controller by the routing controller.

Optionally, the inquiring for a recovery path to the downstream node includes:
inquiring, by the connection controller, to obtain the recovery path which configured in advance and is stored locally, and using spare resource at each node on the recovery path.

Optionally, the inquiring for a recovery path to the downstream node includes: inquiring, by the connection controller, to obtain the recovery path which is configured in advance and stored locally, and using reserved resource at each node on the recovery path. Optionally, the obtaining of the recovery path by the connection controller includes: determining a switching through a preset cycle composed of inter-domain links and a node.

Optionally, the recovery path is a path composed of failure-independent inter-domain links or a path composed of links passing through one or more other domains. Optionally, the method may further include:
in the case of a return-type recovery from a failure, returning to the original path upon elimination of the inter-domain link failure.

Optionally, the method may further include:
initiating automatically an end-to-end recovery in the case that the local recovery from the inter-domain link failure fails.

A device for recovering from an inter-domain link failure according to the present invention includes:
a link resource manager, adapted to detect an inter-domain link failure;
a connection controller, adapted to inquire for a recovery path to a downstream node, and notify a protocol controller to establish the recovery path;
the protocol controller, adapted to establish the recovery path.

Optionally, the device further includes a routing controller, for calculating the recovery path dynamically with an upstream node of the failed inter-domain link as a source node and a downstream node of the failed inter-domain link as a destination node in response to the inquiry from the connection controller.

Optionally, the connection controller inquiries to obtain the recovery path which is configured in advance and stored locally with a spare or reserved resource.

In the present invention, the upstream node of the failed inter-link domain link can initiate the local recovery from the link failure, and the local recovery from the link failure can be performed with the upstream node as the source node and the downstream node as the destination node. Since it is only required to perform the local recovery from the link failure between the upstream node and the downstream node of the failed link, a recovery path can be calculated dynamically or configured in advance, and resource can be reserved for sharing of a recovery bandwidth. It is possible to improve greatly the rate of recovering from the inter-domain link failure and to save the bandwidth.

### Brief Description of the Drawings

Figure 1 is a schematic diagram of a hierarchical network model in the prior art;
Figure 2 is a schematic diagram illustrating a recovery from an end-to-end failure in the prior art;
Figure 3 is a flow diagram of a method for recovering from a link failure according to an embodiment of the present invention;
Figure 4 is a schematic diagram of recovering from a failure by means of an inter-domain link in an embodiment of the present invention;
Figure 5 is a schematic diagram of recovering from a failure by means of a link in connection with another domain in an embodiment of the present invention.

### Detailed Description of the Invention

According to the present invention, a fast local recovery is performed in the case of an inter-domain link failure. A recovery path can be calculated dynamically or be preset. Reservation of resources can be performed for sharing recovery bandwidth. Besides, the recovery path may be another inter-domain link or a link passing through another domain. Therefore, it is possible to improve greatly a rate of recovering from an inter-domain link failure and to save the bandwidth. Moreover, a coordination mechanism is provided for the fast local recovery and an end-to-end recovery, which will be described in detail hereinafter.

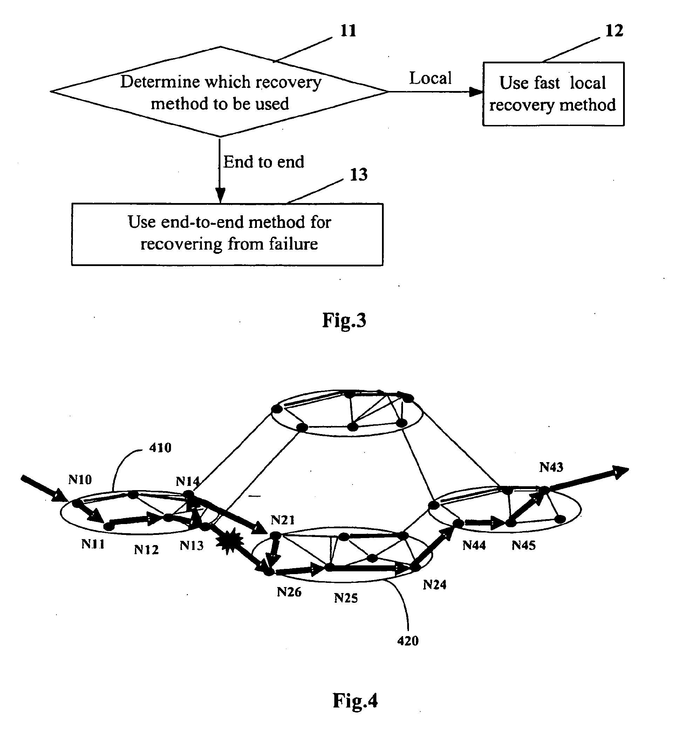

Figure 3 is a flow diagram of a method for recovering from a link failure according to an embodiment of the present invention, where a user can configure a recovery from an inter-domain link failure as the end-to-end recovery or the fast local recovery. Specifically, the method for recovering from a failure mainly includes the following steps:
In step 11, in the case of an inter-domain link failure, it is determined, at a source end of a link, which recovery method to be used, if the recovery method is the fast local recovery, going to step 12, otherwise going to step 13.
In step 12, the fast local recovery method is used to determine an upstream node and a downstream node of the failed inter-domain link, and to initiate a recovery from the link failure with the upstream node and the downstream node as a source node and a destination node. If the fast local recovery method fails to recover from the failure, the process goes to step 13, where the recovery from the failure is performed by means of the end-to-end recovery method.
In step 13, the end-to-end recovery method is performed, that is, the head node of an LSP is notified to perform an end-to-end recovery.

Hereinafter, the method of a fast local recovery from a link failure according to the present invention will be described by way of an embodiment thereof.

According to the embodiment of the present invention, the upstream node (referred to as a failure recovery point) of the link can initiate the fast recovery from the inter-domain link failure. Particularly, upon detection of a failure, the upstream node of the link initiates a recovery from the inter-domain link failure, or upon detection of a failure, the downstream node of the link notifies the upstream node of the link to initiate a recovery from the inter-domain failure.

It should be noted that the user can initiate the inter-domain fast recovery in unit of connection or link. In the former case, if there is an inter-domain link failure, the fast local recovery is performed for a connection for which the fast recovery has been initiated, and the end-to-end recovery is performed for other connections, and in the latter case, the fast local recovery can be performed for all traffics routed through this inter-domain link. Various solutions, such as a recovery method of dynamic calculation or a method of presetting a recovery path, can be supported at the source end of the inter-domain link.

For the recovery method of dynamic calculation, a route is calculated with two ends of this inter-domain link as a source node and a destination node for connection recovery, so as to obtain a recovery path. Then, establishment of the recovery path and traffic switching can be initiated through a signaling in accordance with the recovery path.

For the presetting of a recovery path for recovering from a failure, two approaches can be used, one of which is to preset a recovery path but reserve no resource, i.e. two ends of this inter-domain link are taken as a source node and a destination node for connection recovery. Thus, establishment of the recovery path and traffic switching can be initiated through a signaling in accordance with the preset recovery path, and a spare resource can be used on the recovery path.

The other approach is to preset a recovery path and reserve a resource thereof, i.e. two ends of this inter-domain link are taken as a source node and a destination node for connection recovery. Thus, establishment of the recovery path and traffic switching can be initiated through a signaling in accordance with the preset recovery path, and the reserved resource can be used on the recovery path. The reserved resource can be shared by a failure-independent connection.

It should be noted that the recovery path can be obtained in other approaches. For example, a p-cycle (preset cycle) may be composed of inter-domain links and a node, which is well known in the prior art and thus will not be described here.

Further, the local recovery according to the present invention can be of a return or non-return type. In the case of the return type, the connection will return to the original path (via the link) upon elimination of the inter-domain link failure.

The recovery path for fast recovering from an inter-domain failure may be a link between two domains, which does not belong to an unassociated failure SRLG (Shared Risk Link Group). Alternatively, the recovery can be accomplished through another domain, and in the case that the fast inter-domain recovery fails, the end-to-end recovery can be initiated to maximize traffic survivability.

Now the description is given with specific examples. Referring to the network as shown in Figure 4, there is a connection across multiple domains, with a route as indicated by the black line in the figure, which is N10->N11->N12->N13->N26->N25->N24->N44->N45-N43. In the case that the inter-domain link N13- N26 between the CDs 410 and 420 fails, a recovery can be performed at the N13 with the N26 as a destination node, and a recovery path can be calculated dynamically or be preset. Presume that the recovery path is N13->N14->N21->N26. Establishment of the recovery path and traffic switching can be performed at the N13 with the N13 as a source node and the N26 as a destination node, for the fast recovery of the traffic. If the fast recovery fails, the end-to-end recovery can be initiated to maximize the traffic survivability. Hereinafter, interactions between elements in an ASON according to the present invention will be described in detail with reference to the example in Figure 4. Referring to Figure 4, upon failure of the link N13-N26, a Link Resource Manager (LRM) at the N13 detects the failure and notifies a Connection Controller (CC), which in turn initiates the fast inter-domain recovery. In this case, it is unnecessary for a Protocol Controller (PC) to notify the head node N10 of the traffic. According to the present invention, the CC can function as the following.
1) The recovery path is obtained by dynamic calculation:
   the CC inquiries a Routing Controller (RC) for the recovery path, with two ends of the inter-domain link as a source node and a destination node for connection recovery, and the RC calculates the recovery path dynamically.
2) If the recovery path is preset at the CC by the user without a resource reserved on the recovery path, the CC can inquire directly to obtain the locally stored recovery path and use a spare resource.
3) If the recovery path is preset at the CC by the user with a resource reserved on the recovery path, the CC can inquire directly to obtain the locally stored recovery path and use the reserved resource.

Upon obtaining the recovery path, the CC notifies the PC (through the RSVP-TE protocol or otherwise) to establish the recovery path, and bridges the traffic onto the recovery path. The recovery process is thus completed substantially.

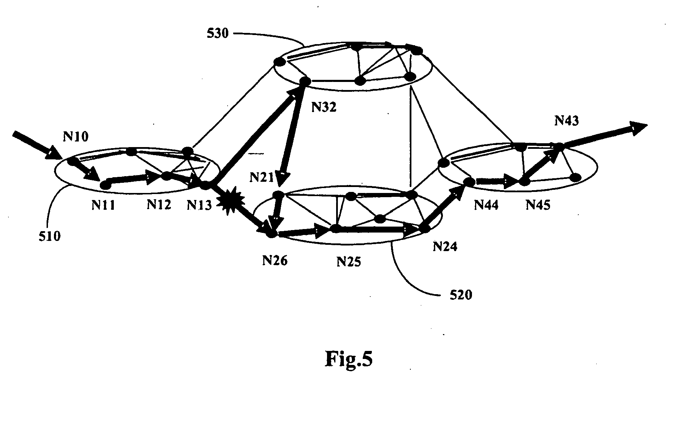

Moreover, in the case of a recovery from a cross-domain failure, referring to the network as shown in Figure 5, there is a connection across multiple domains, with the route as indicated by the black line in the figure, which is N10->N11->N12->N13->N26->N25->N24->N44->N45-N43. In the case that the inter-domain link N13- N26 between the CDs 510 and 520 fails, a recovery can be performed at the N13 with the N26 as a destination node. Because there is only one inter-domain link between the CDs 510 and 520, the fast recovery has to be performed through another domain, which is the CD 530 in this embodiment. Presume that the recovery path is N13->N32->N21->N26. Establishment of the recovery path and traffic switching can be performed at the N13 with the N13 as a source node and the N26 as a destination node, for the fast recovery of the traffic. If the fast recovery fails, the end-to-end recovery can be initiated to maximize the traffic survivability.

An embodiment of a device for recovering from an inter-domain link failure according to the present invention includes a link resource manager (LRM), a connection controller (CC), a protocol controller (PC), and a routing controller (RC).

Particularly, upon detection of a failure, the LRM at a node notifies the CC which in turn initiates an inter-domain fast recovery, and in this case, it is unnecessary for the PC to notify the head node of the traffic. In the embodiment, the CC can function as the following.
1) The recovery path is obtained by dynamic calculation:
   the CC inquiries the RC for the recovery path, with two ends of the inter-domain link as a source node and a destination node for connection recovery, and the RC calculates the recovery path dynamically.
2) If the recovery path is preset at the CC by the user without a resource reserved on the recovery path, the CC can inquire directly to obtain the locally stored recovery path and use a spare resource.
3) If the recovery path is preset at the CC by the user with a resource reserved on the recovery path, the CC can inquire directly to obtain the locally stored recovery path and use the reserved resource.

Upon obtaining the recovery path, the CC notifies the PC to establish the recovery path and bridges the traffic onto the recovery path. The recovery process is thus completed substantially.

While the present invention has been described and illustrated with reference to the embodiments thereof and the appended drawings, it shall be recognized by those skilled in the art that those embodiments and drawings are merely illustrative and not restrictive, that the present invention shall be not limited thereto, and that various modifications and variations can be made thereto in light of the descriptions and the drawings without departing from the scope of the present invention as defined by the accompanying claims.

## Claims

1. A method for recovering from an inter-domain link failure in an Automatically Switched Optical Network, comprising:
initiating a local recovery by an upstream node of a failed inter-domain link;
for a connection for which a local recovery has been initiated, performing the local recovery with the upstream node of the failed inter-domain link as a source node and a downstream node of the failed inter-domain link as a destination node, wherein the performing the local recovery comprises: inquiring to obtain a recovery path to the downstream node by a connection controller at the upstream node; initiating establishment of the recovery path from the upstream node to the downstream node by a protocol controller; upon the establishment of the recovery path, bridging traffic on the failed inter-domain link onto the recovery path.

2. The method according to claim 1, further comprising: for connections for which a local recovery has not been initiated, performing end-to-end recovery.

3. The method according to claim 1 or 2, wherein the local recovery is performed if the upstream node detects the inter-domain link failure or if the downstream node detects and notifies the upstream node.

4. The method according to claim 1 or 2, wherein the inquiring for a recovery path to the downstream node comprises:
inquiring a routing controller for the recovery path, with the upstream node of the failed inter-domain link as a source node and the downstream node of the failed inter-domain link as a destination node for connection recovery, and
calculating and returning the recovery path to the connection controller by the routing controller.

5. The method according to claim 1 or 2, wherein the inquiring for a recovery path to the downstream node comprises:
inquiring, by the connection controller, to obtain the recovery path which configured in advance and is stored locally, and using spare resource at each node on the recovery path.

6. The method according to claim 1 or 2, wherein the inquiring for a recovery path to the downstream node comprises: inquiring, by the connection controller, to obtain the recovery path which is configured in advance and stored locally, and using reserved resource at each node on the recovery path.

7. The method according to claim 1 or 2, wherein the obtaining of the recovery path by the connection controller comprises: determining a switching through a pre-configured cycle composed of inter-domain links and a node.

8. The method according to claim 1 or 2, wherein the recovery path is a path composed of failure-independent inter-domain links or a path composed of links passing through one or more other domains.

9. The method according to claim 1 or 2, further comprising:
in the case of a return-type recovery from a failure, returning to the original path upon elimination of the inter-domain link failure.

10. The method according to claim 1,or 2, further comprising:
initiating automatically an end-to-end recovery in the case that the local recovery from the inter-domain link failure fails.

## Patentansprüche

1. Verfahren zur Wiederherstellung nach einem Fehler der Verbindung zwischen Domains in einem optischen Netzwerk mit automatischer Vermittlung (Automatically Switched Optical Network), umfassend:
Auslösen einer lokalen Wiederherstellung durch einen Upstream-Knoten einer ausgefallenen Verbindung zwischen Domains;
für eine Verbindung, für die eine lokale Wiederherstellung ausgelöst wurde, Ausführen der lokalen Wiederherstellung mit dem Upstream-Knoten der ausgefallenen Verbindung zwischen Domains als Quellen-Knoten und einem Downstream-Knoten der ausgefallenen Verbindung zwischen Domains als Ziel-Knoten, wobei die Ausführung der lokalen Wiederherstellung umfasst:
Anfragen zum Erhalten eines Wiederherstellungs-Pfades zum Downstream-Knoten durch eine Verbindungs-Steuerung in dem Upstream-Knoten; Auslösen des Aufbaus des Wiederherstellungs-Pfades vom Upstream-Knoten zum Downstream-Knoten durch eine Protokoll-Steuerung; bei Aufbau des Wiederherstellungs-Pfades, Umschalten des Verkehrs der ausgefallenen Verbindung zwischen Domains auf den Wiederherstellungs-Pfad.

2. Verfahren gemäß Anspruch 1, ferner umfassend: Für Verbindungen, für die eine lokale Wiederherstellung nicht ausgelöst wurde, Durchführen einer Ende-zu-Ende-Wiederherstellung.

3. Verfahren gemäß Anspruch 1 oder 2, wobei die lokale Wiederherstellung durchgeführt wird, wenn der Upstream-Knoten den Fehler der Verbindung zwischen Domains erkennt, oder wenn der Downstream-Knoten ihn erkennt und den Upstream-Knoten benachrichtigt.

4. Verfahren gemäß Anspruch 1 oder 2, wobei das Anfragen nach einem Wiederherstellungs-Pfad zum Downstream-Knoten umfasst:
Anfragen bei einer Routing-Steuerung nach dem
Wiederherstellungs-Pfad mit dem Upstream-Knoten der ausgefallenen Verbindung zwischen Domains als Quellen-Knoten und dem Downstream-Knoten der ausgefallenen Verbindung zwischen Domains als Ziel-Knoten zur Wiederherstellung der Verbindung, und
Berechnen und Zurückgeben des Wiederherstellungs-Pfades an die Verbindungs-Steuerung durch die Routing-Steuerung.

5. Verfahren gemäß Anspruch 1 oder 2, wobei das Anfragen nach einem Wiederherstellungs-Pfad zum Downstream-Knoten umfasst:
Durch die Verbindungs-Steuerung Anfragen zum Erhalten des Wiederherstellungs-Pfades, der im Voraus konfiguriert und lokal gespeichert ist, und Benutzen von Ersatz-Ressourcen in jedem Knoten auf dem Wiederherstellungs-Pfad.

6. Verfahren gemäß Anspruch 1 oder 2, wobei das Anfragen nach einem Wiederherstellungs-Pfad zum Downstream-Knoten umfasst:
Durch die Verbindungs-Steuerung Anfragen zum Erhalten des Wiederherstellungs-Pfades, der im Voraus konfiguriert und lokal gespeichert ist, und Benutzen von reservierten Ressourcen in jedem Knoten auf dem Wiederherstellungs-Pfad.

7. Verfahren gemäß Anspruch 1 oder 2, wobei das Erhalten des Wiederherstellungs-Pfades durch die Verbindungs-Steuerung umfasst: Bestimmen einer Vermittlung durch einen vorkonfigurierten Zyklus, bestehend aus Verbindungen zwischen Domains und einem Knoten.

8. Verfahren gemäß Anspruch 1 oder 2, wobei der Wiederherstellungs-Pfad ein Pfad ist, der aus fehlerunabhängigen Verbindungen zwischen Domains besteht, oder ein Pfad, der aus Verbindungen besteht, die eine oder mehrere andere Domains durchlaufen.

9. Verfahren gemäß Anspruch 1 oder 2, ferner umfassend:
Im Fall einer Fehler-Wiederherstellung vom Rückkehr-Typ, bei Beseitigung des Fehlers der Verbindung zwischen Domains Rückkehr zum ursprünglichen Pfad.

10. Verfahren gemäß Anspruch 1 oder 2, ferner umfassend:
Für den Fall, dass die lokale Wiederherstellung nach dem Fehler der Verbindung zwischen Domains fehlschlägt, automatisches Auslösen einer Ende-zu-Ende-Wiederherstellung.

## Revendications

1. Méthode pour la remise en état à partir d'une défaillance d'un lien inter-domaine dans un réseau optique à commutation automatique, comprenant : l'initiation d'une remise en état locale par un noeud en amont d'un lien inter-domaine défaillant ;
pour une connexion pour laquelle une remise en état locale a été initiée, l'exécution de la remise en état locale avec le noeud en amont du lien inter-domaine défaillant comme noeud source et un noeud en aval du lien inter-domaine défaillant comme noeud de destination, sachant que l'exécution de la remise en état locale comprend : la requête pour obtenir un chemin de remise en état vers le noeud en aval par un contrôleur de connexion au noeud en amont ; l'initiation de l'établissement du chemin de remise en état depuis le noeud en amont vers le noeud en aval par un contrôleur de protocole ; à l'établissement du chemin de remise en état, le pontage du trafic sur le lien inter-domaine défaillant vers le chemin de remise en état.

2. Méthode selon la revendication 1, comprenant en outre :
pour les connexions pour lesquelles aucune remise en état locale n'a été initiée, l'exécution de la remise en état de bout en bout.

3. Méthode selon l'une quelconque des revendications 1 ou 2, dans laquelle la remise en état locale est exécutée si le noeud en amont détecte la défaillance du lien inter-domaine ou si noeud en aval détecte et notifie le noeud en amont.

4. Méthode selon l'une quelconque des revendications 1 ou 2, dans laquelle la requête d'un chemin de remise en état vers le noeud en aval comprend :
la requête du chemin de remise en état à un contrôleur de routage, avec le noeud en amont du lien inter-domaine défaillant comme noeud source et le noeud en aval du lien inter-domaine défaillant comme noeud de destination pour la remise en état de la connexion, et le calcul et le retour du chemin de remise en état au contrôleur de connexion par le contrôleur de routage.

5. Méthode selon l'une quelconque des revendications 1 ou 2, dans laquelle la requête d'un chemin de remise en état vers le noeud en aval comprend :
la requête, par le contrôleur de connexion, pour obtenir le chemin de remise en état configuré au préalable et mémorisé localement, et l'utilisation de ressources de réserve à chaque noeud sur le chemin de remise en état.

6. Méthode selon l'une quelconque des revendications 1 ou 2, dans laquelle la requête d'un chemin de remise en état vers le noeud en aval comprend : la requête, par le contrôleur de connexion, pour obtenir le chemin de remise en état configuré par avance et mémorisé localement, et l'utilisation de ressources réservées à chaque noeud sur le chemin de remise en état.

7. Méthode selon l'une quelconque des revendications 1 ou 2, dans laquelle l'obtention du chemin de remise en état par le contrôleur de connexion comprend : la détermination d'une commutation à travers un cycle préconfiguré composé de liens inter-domaine et d'un noeud.

8. Méthode selon l'une quelconque des revendications 1 ou 2, dans laquelle le chemin de remise en état est un chemin composé de liens inter-domaine indépendants des défaillances ou un chemin composé de liens transitant par un ou plusieurs autres domaines.

9. Méthode selon l'une quelconque des revendications 1 ou 2, comprenant en outre :
dans le cas d'une remise en état de type retour depuis une défaillance, le retour au chemin initial à l'élimination de la défaillance du lien inter-domaine.

10. Méthode selon l'une quelconque des revendications 1 ou 2, comprenant en outre : l'initiation automatique d'une remise en état de bout en bout dans le cas où la remise en état locale du lien inter-domaine défaillant échoue.
